# EUROPEAN PATENT APPLICATION

(11) **EP 3 444 770 A1**
(43) Date of publication of application: **20.02.2019**
(21) Application number: 17020370.7
(22) Date of filing: 18.08.2017
(51) Int. Cl.: G06Q 30/06

(54) **ONLINE SHARED CART TO CREATE AGGREGATED ORDERS ON SINGLE VENDOR E-COMMERCE WEBSITES OR THIRD PARTY ONLINE MARKETPLACES**

(71) Applicant: Angelini, Lorenzo, Dublin 1 (IE)
(72) Inventor: Angelini, Lorenzo, Dublin 1 (IE)

(57) **Abstract**

A unique share cart that enables customers to dynamically aggregate the goods or services in a single order enhancing the e-commerce value proposition. The guest users involved in the transaction are identified in advance by the initial purchaser and have a predetermined window opportunity to sign in, access the shared cart and add products. Once a group of users has been created items can be added to the share cart simultaneously with information staying within the web server storage device. Moreover, the final order invoice, sent to the vendor and each user, takes into account the subtotals, both in terms of products and delivery costs. After the deadline, the access to guest users will be denied and only the initial purchaser will be able to finalise the purchase.

## Description

### FIELD OF THE INVENTION

This invention is about a framework and method for purchasing items online. Specifically, the invention relates to a method for sharing the shopping experience among users via a creation of a unique shared shopping cart where individuals can directly add items and participate to the transaction.

### BACKGROUND OF THE INVENTION

E-commerce is enabling vendors to sell everywhere with their own website and online marketplaces to aggregate the vendor offering in even bigger propositions. An increasing number of vendors is gradually moving online, large scale retailers are the one that moved first, followed by mid-size businesses and ultimately the small merchants. What make an online business attractive for a vendor is the possibility to reach an even larger audience and promote his own products at a lower cost and more targeted audience. Inventory management and data analysis improve as well once the business migrate online.

One limitation of online e-commerce model is that delivery costs often restrain the ability of small businesses to be competitive in the market place and customers give up buying the product they want because the delivery cost become a too big component of the final price. The result is that online is becoming a place where scale is even more important than in the physical world. There is at present no convenient way for allowing customers to join force, aggregate their orders and lower the delivery cost per user. In many cases, it may be valuable for different users to participate in an online transaction. For instance, a customer may wish to purchase a niche product from a small merchant website. The delivery cost is still the main component of the final price. it might benefit the user to share information about his purchase with friends or family and allow them to participate to the transaction before it is completed. The ability to share information, aggregate orders in a single request and abate delivery costs would be very valuable for both vendors and customers. It is a method that as core part has the concept of inclusivity. Vendors that are too small or not diversified enough in terms of product range can still have a market online and get orders. Customers, on the other side, that do not have credit or debit card credentials or that can't reach the amount required for the delivery to be convenient, have the possibility of leverage each other and overcome the issues.

### SUMMARY OF THE INVENTION

A primary objective of this invention is to provide a common ground for users in order to share information and process aggregated orders in a fast and direct way.

In order to achieve the objective mentioned above, the present invention provides a method and apparatus for adding users to a shopping cart and process an order which is the sum of the single orders. A unique share cart is created by the initial purchaser (purchasing, leasing or renting are all included in the definition of "purchaser"), a deadline for the transaction is determined as well and automatically invites in the form of email sent to the guest users. Moreover, the final bill, sent to the vendor and each user, takes into account the subtotals, both in terms of products and delivery costs. The guest users involved in the transaction are identified in advance by the initial purchaser and have a predetermined window opportunity to sign in, access the shared cart and add products. After the deadline, the access to guest users will be denied and only the initial purchaser will be able to finalise the purchase.

It is to be understood that both the foregoing general description and the following detailed description are exemplary, and are intended to provide further explanation of the invention as claimed. Other advantages and features of the invention will be apparent from the following description, drawings and claims.

### BRIEF DESCRIPTION OF THE DRAWINGS

Figure 1 shows a simplified diagram of the network among the client computers and server to the server computer of the vendor. Moreover, the diagram includes the databases overlay created by the invention
Figure 2-1 through 2-5 shows a process flow chart for the method of the preferred embodiment by which purchase selections can be added by guest users to the unique share cart created by the initial purchaser
Figure 3 shows a simplified representation of the shared setting section where the initial purchaser selects the existing group tab where he can choose from a list of groups previously created by the user
Figure 4 shows a simplified representation of the shared setting section where the initial purchaser selects the people tab where he can add users emails as a one-off option
Figure 5 shows a simplified representation of the shared setting section where the initial purchaser selects the new group tab where he can add users emails and save the group list
Figure 6 shows a simplified representation of the shared setting section where the guest user, after accepting the invite, switch from his own cart to the share cart
Figure 7 shows a simplified representation of the shared cart page view of the guest user where he can add his own items, he sees the initial purchaser items but he can't modify them. He has the option at the bottom of the page to end the sharing period
Figure 8 shows a simplified representation of the shared setting section of the guest user after he ends the sharing session and returns automatically to the personal cart
Figure 9 shows a simplified representation of the share cart view of the initial purchaser with the items sorted by users
Figure 10 shows a simplified representation of the share cart activity log with the duration of the share cart, start/end time, guest users emails and the list of the guest users that completed the process
Figure 11 shows a simplified representation of the checkout page showing the subtotals by user of items costs and shipping costs
Figure 12 shows a simplified representation of the email notification that guest users receive with the order details and subtotals

### DETAILED DESCRIPTION OF THE INVENTION

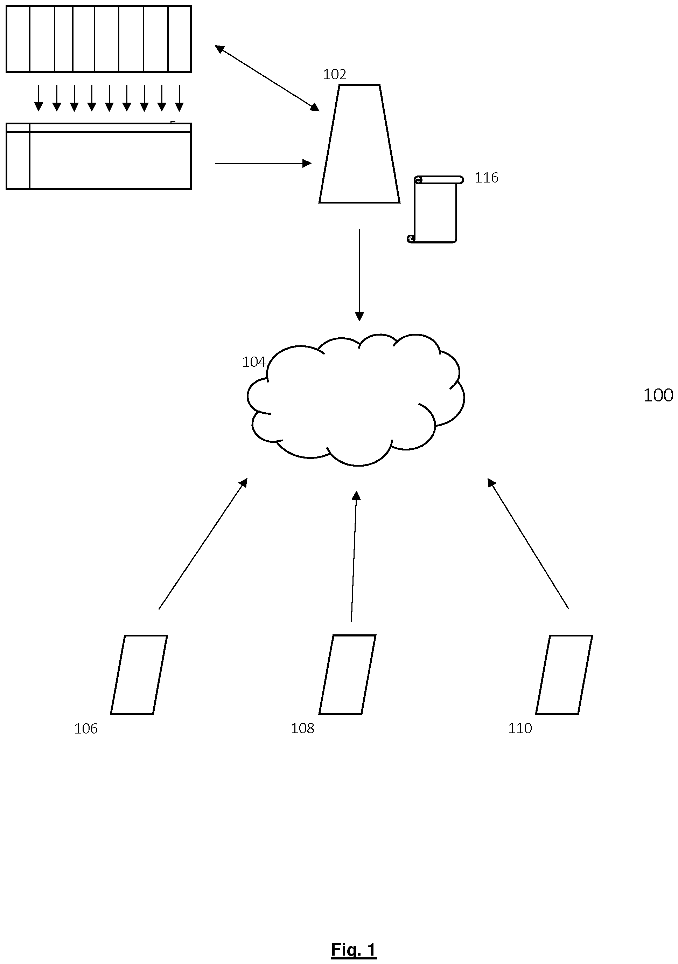

Figure 1 shows a simplified diagram of an e-commerce single vendor website or marketplace network 100. It includes a network of the likes of the World Wide Web (the Internet), to which are coupled a web server computer of a single vendor or marketplace 102 and the client or user computers 106, 108 and 110 of prospective purchasers of good and services. Web server computers (102) provide information about good and services offered by vendors, moreover they accepts data and commands from client computers (106, 108 and 110). The server can accept and/or ask for payments. In a standardized e-commerce transaction, a server 102 typically corresponds to a website which transmit graphical and textual information 116 to a client computer. The requested information 116 is transmitted from the server system 102 to the client system (106, 108 and 110) and displayed using a web browser software. In most cases, client computers (106, 108 and 110) will be single-users. E-commerce experience can be improved allowing the users to share information and coordinate the final purchase. The value can be created in all the phases of the purchase. By creating a unique share shopping cart an e-commerce transaction can be shared among colleagues, friends or family. The information never leaves the website server 112 but is aggregated and matched by an ad hoc extension that we call "table" 114. The table gathers 2 type of information, the one related to the groups or list of users created by the initial purchaser (it stores names, user IDs and email addresses) and the one related to the specifics of the transaction (it stores names, owner of the share cart, guest users emails, duration of the share cart decided by the initial purchaser as well as start time, end time and the text related to the finished transaction). Using the user IDs the table will aggregate the data from the users in order to create a single list of items associated with the transaction (share cart). By way of example, an initial purchaser of goods and/or services might wish to buy together with family or friends with the intention of lower the delivery costs per user, obtain discounts and as a way to socialise. If the e-commerce platform (vendor or marketplace) provides a shared cart as described above, the initial user selection can be shared with colleagues, friends or family who then might be able to add or delete items, participate to the delivery costs and obtain discounts related to the size of the order. The value created by the share cart transaction benefits both the customers and the vendor. The customers have more purchasing power, less delivery costs and a better selection. The vendor (especially if small size) can increase its own market as the order value increase and the weight of delivery costs (usually higher for small vendors) decrease making its offering more competitive and appealing. In Figure 1, a web server for an e-commerce vendor and/or marketplace that provides to its customers a share cart optionality is represented by a computer 102 couple to a mass storage device 112. The disk store both applications and data. The disk will also store customer and product offering information together with product selection information coming from the customers. The overlay created by the share cart, also called as "table" 114 gather the relevant information related to users and products selection and match the specificity of the transaction with the information available. The information processed by the table relates to single and group of users, products details and specific details of the unique transaction like duration of the share cart, start and end time, administrator of the share cart (usually the initial purchaser).

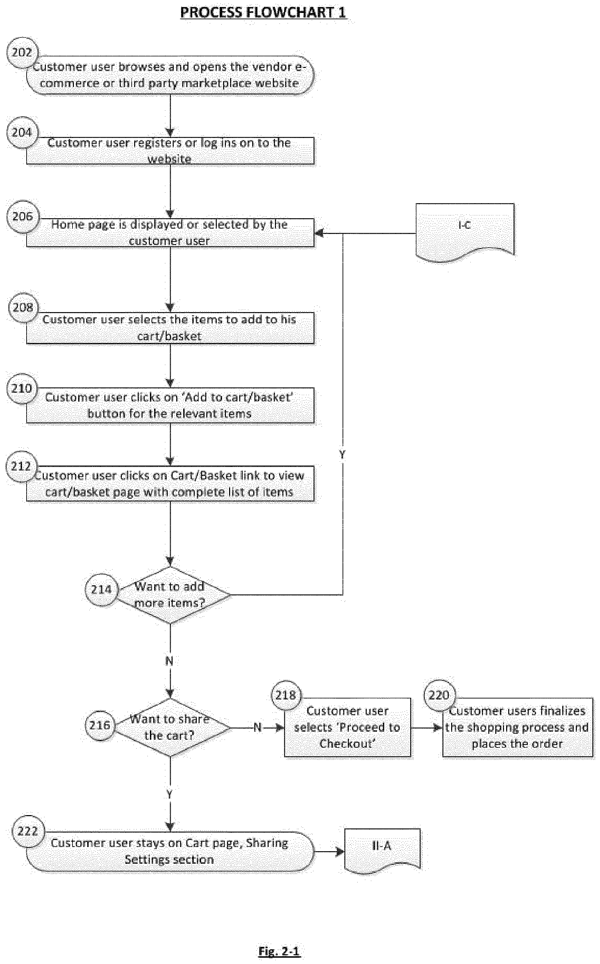

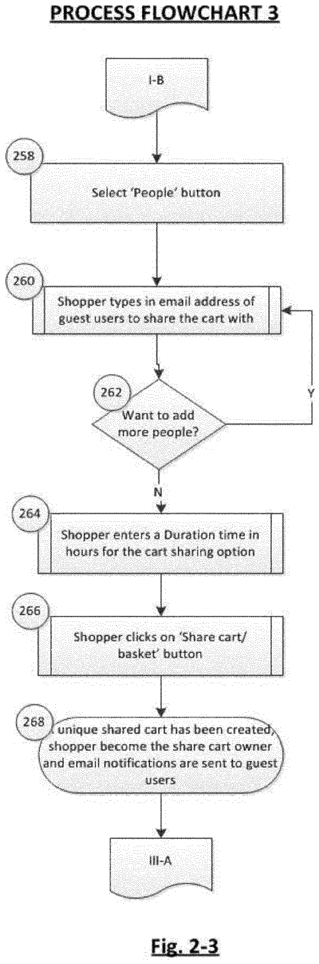

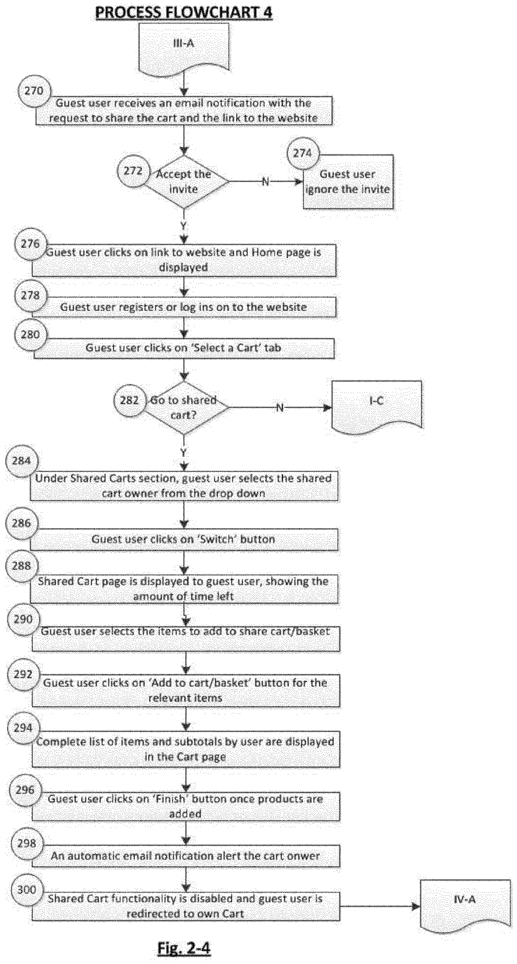

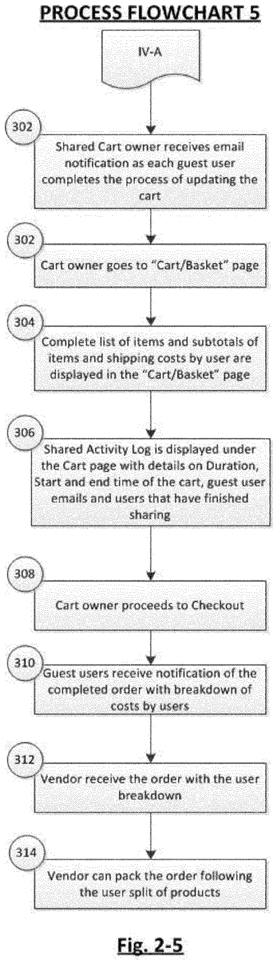

The various steps of the method by which a shared online shopping cart is created by a customer when he decides to add guest users and to process the transaction are shown in Figures 2-1 through 2-5. As specified above "customer" or "purchaser" using such methodology may purchase a good, rent, lease or receive a service from a service provider.

Figure 2.1 shows the first steps that an initial purchaser (called "admin" or "owner" of the cart) has to make in order to create a share cart. The first step of the method 202 shows that an initial purchaser select the browser and goes online selecting the website URL and opening the home page. The next step of the method 204 includes a log on process by which the client computer (106, 108 and 110) is identified and authenticated by the web server of the vendor by providing username, user ID and password. Those information together with billings and payments information are stored into the mass storage device (or disk) 112. Once the user has logged on, an home page is displayed 206 and the customer selects the items from the list of products. A sophisticated vendor may choose to ask the potential buyer to specify the type of products he is interested in. Once the items are added to the cart/basket by clicking on the "add to cart/basket" 210, the customer clicks on the "cart/basket" link page to view the full list of items selected and the relevant information 212. In step 214 the customer has to decide whether he wants to add more products and go back to step 206 or is satisfied with the selection. In case the purchaser is happy with the selection but wants to share the cart 216, as delivery costs are too high or he knows someone else may be interested in buying products from that specific vendor, he advances to step 222 where, below the cart/basket view, sharing setting are shown in the same page. In case the user do not want to share the cart he can actually click on "proceed to check out" button 218 and finalise the shopping process placing the order 220.

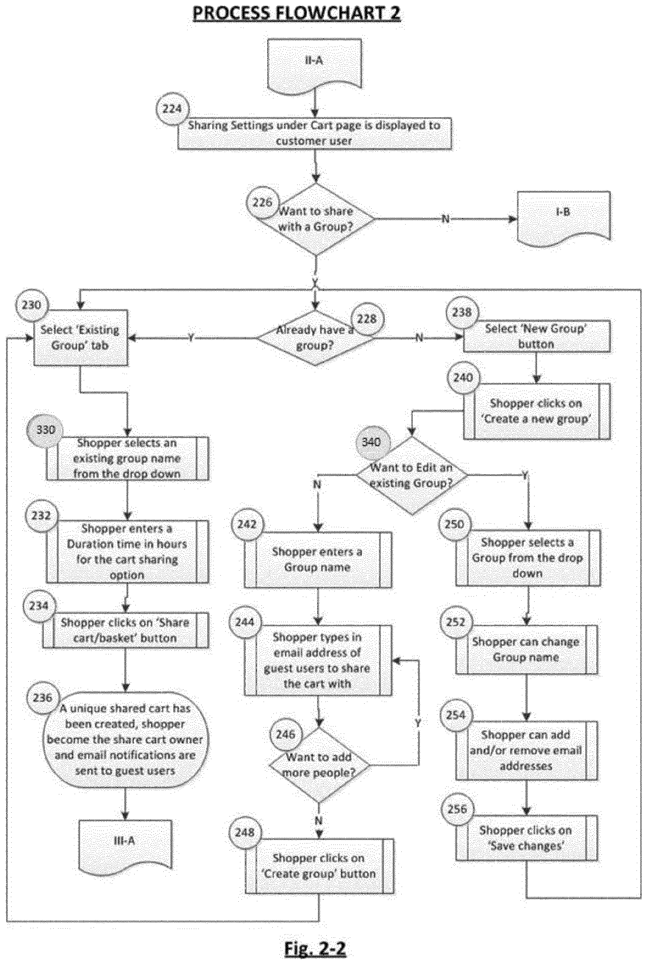

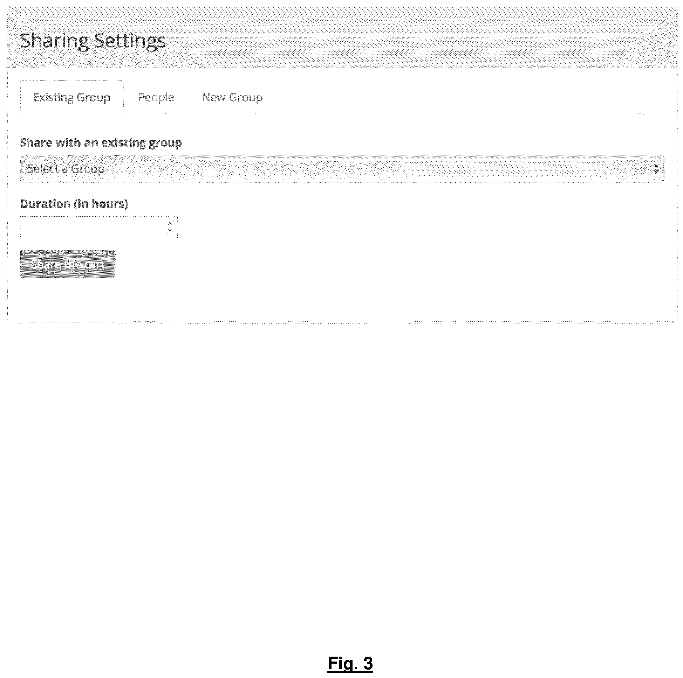

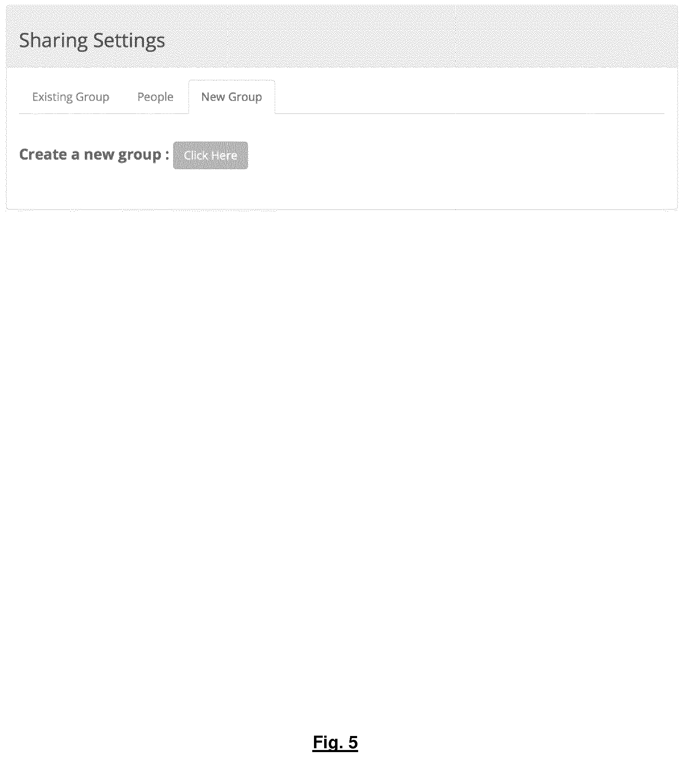

Figure 2.2 shows the case where a list of guest users is selected and a share cart is activated. Sharing settings 224 are displayed to the initial purchaser under the "cart/basket" page. The step 226 describes the decision of the initial purchaser (also shopper) related to the type of guest user list to select or create. If the user wants to share the cart with a favourite group or type of users or with an occasional list of users. In case the initial purchaser wants to share the cart with a group he has to decide to select an existing group or create a new group 228. As illustrated by the figure 3, If the initial purchaser select the "existing group" tab 230, the shopper has the option to select an existing group name from the drop down list 330. Once the shopper has selected the group name, he can add a duration time in hours for the cart sharing option 232. That set the deadline for guest users to add product to the cart. In step 234 the shopper clicks on the "share cart/basket" button and a unique share cart has been created, shopper become the share cart owner (admin) and email notifications are sent to guest users 236. Coming back to step 228, if the shopper doesn't have already a group, he can select the "New Group" tab 238, as shown by the figure 5. Next step for the shopper is to click on "Create a new group" 240 and make the decision of editing an existing group or proceed with the set up of a new group. If the shopper decides to create a new group, he enters a group name 242 and type the email addresses of guest users to share the cart with 244. Once the shopper has finished adding names, he clicks on "create group" button 248, the new group has been created and the shopper can select the group from the "Existing group" tab 230. Going back to step 340, if the shopper decides to edit an existing group, he can simply select a group from the dropdown list 250, the shopper can change the group name 252 and add or remove users email addresses 254. Once he is done with the changes he can click on "save changes" button 256 and select the group from the "existing group" tab 230.

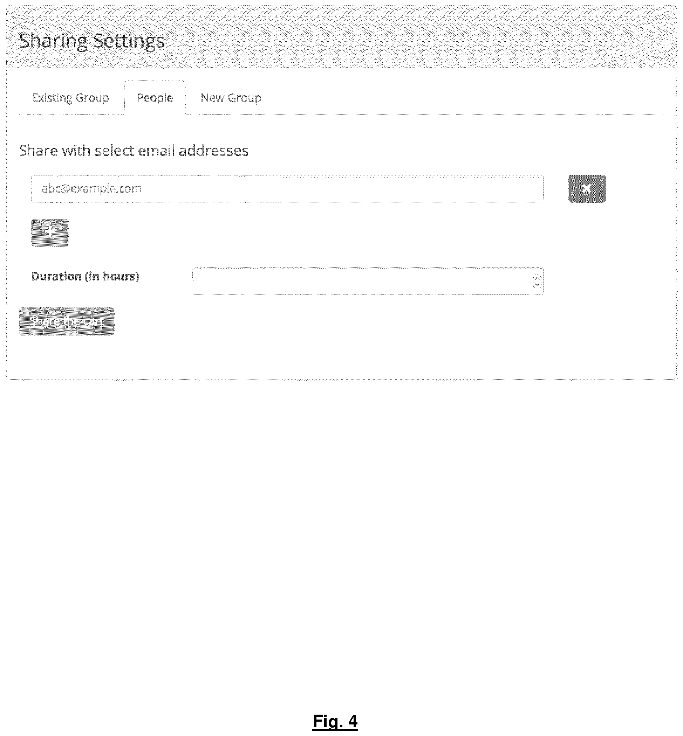

Figure 2.3 shows a flowchart related to the option of selecting a one-off list of users without saving any group. As shown by figure 4 the shopper selects "people" tab 258 and types in email addresses of the guest users to share the cart with 260. The shopper can add as many emails as he wants. The duration of the shared optionality is set in hours 264 by the shopper (also admin). Once the email address list and the duration have been decided, the shopper clicks on "share cart/basket" button 266 and a unique share cart has been created, shopper become the share cart owner and email notifications are sent to guest users.

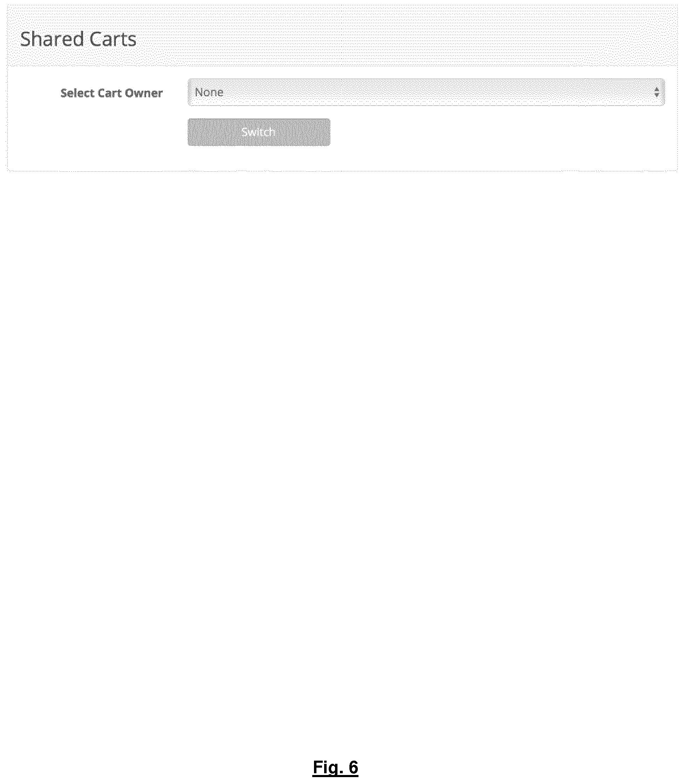

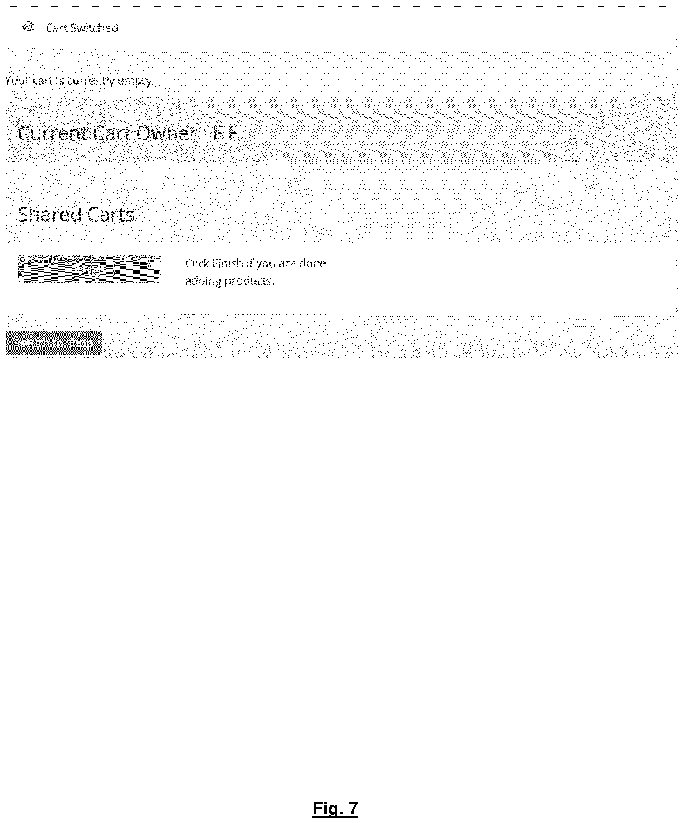

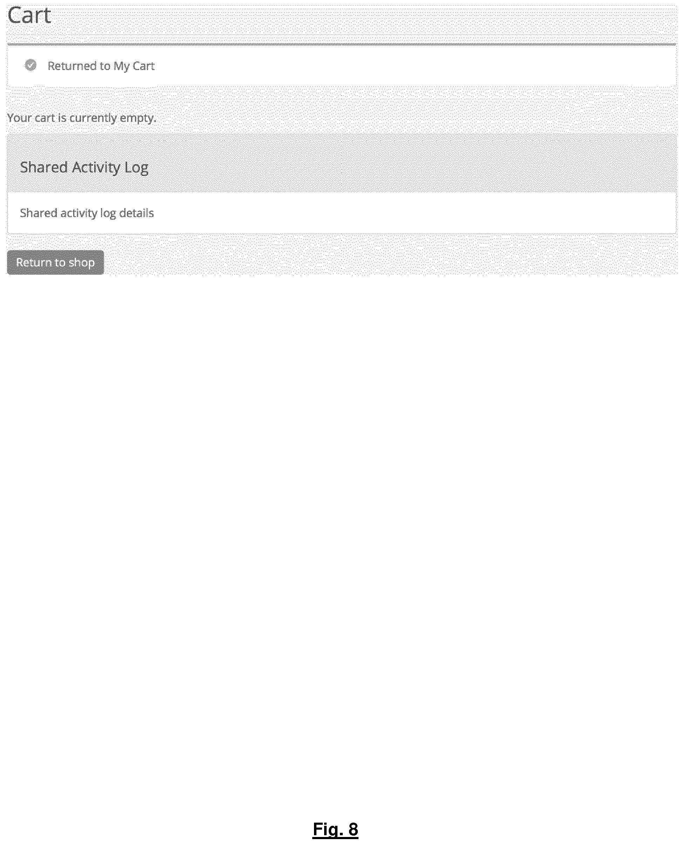

Figure 2.4 shows a process flowchart that explain the guest user steps to participate to the share cart activity. The first step 270 is about the guest user receiving the email notification from the cart owner with the invite to the share cart and the link to the website. The guest user makes a decision to accept or ignore the invite 274. The guest user can accept the invite, instead, clicking on the website link where the home page is displayed 276. Once the guest user is directed to the website, he can log on or register on to the website 278 to access the personalised area. The guest user clicks on "select a cart/basket" button 280 to be redirected to a web page where he can actually select the share cart. Under the share cart section (shown in figure 6) the guest user now makes a choice 282 of selecting the share cart or remain on the own personal cart. If the shopper decides to select a share cart from the dropdown menu, he can actually see all the share carts he has been invited to 284. Next step 286 is to click on the "switch" button and automatically the share cart page is displayed to guest user as illustrated by figure 7, showing the items selected by the admin (not editable from the guest user) and the amount of time left before the share cart expire 288. The guest user selects the items to add to the share cart/basket 290 and clicks on "add to cart/basket" for the relevant items 292. Once directed to the cart page a complete list of items and subtotals by user are displayed 294. In this way there is full visibility of good and services and the costs associated, with a breakdown by user. Guest user clicks on "finish" button once the products or services are added 296. An automatic email notification will alert the cart owner 298 and share cart functionality is disable from the guest user ID 300. The default cart now is the own personal cart like illustrated in figure 8.

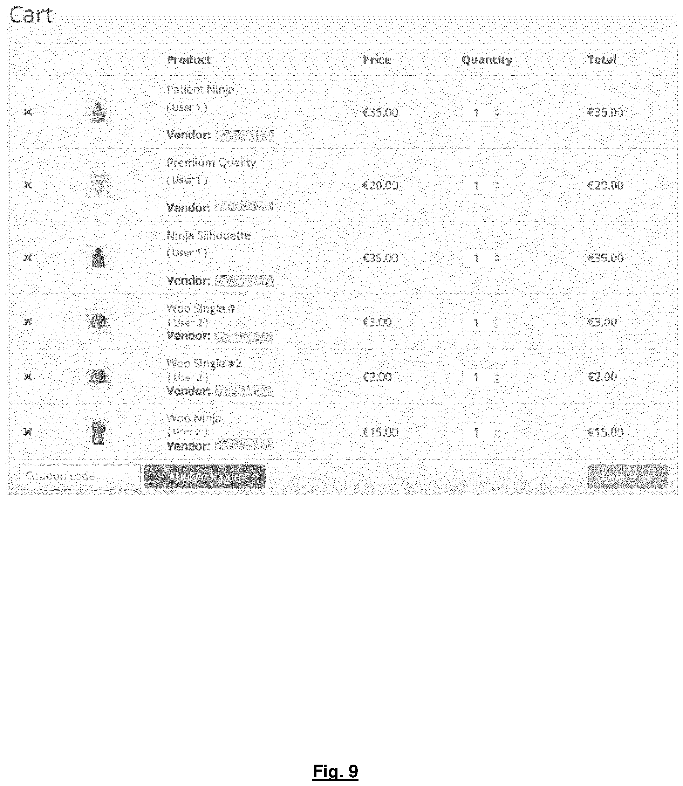

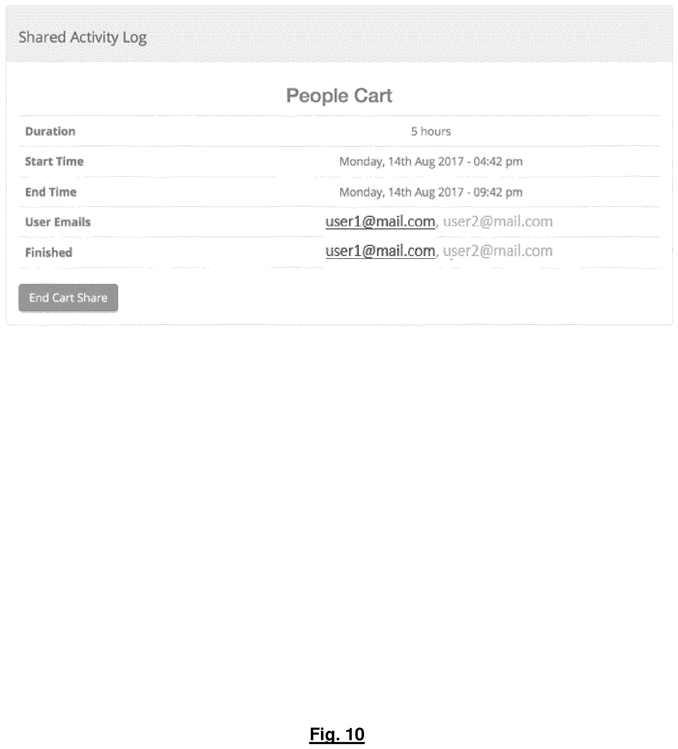

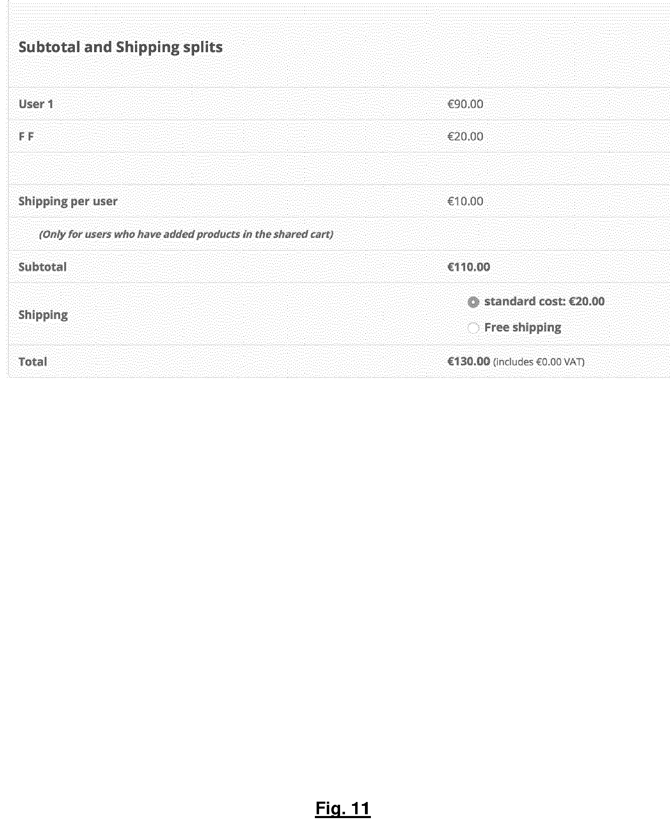

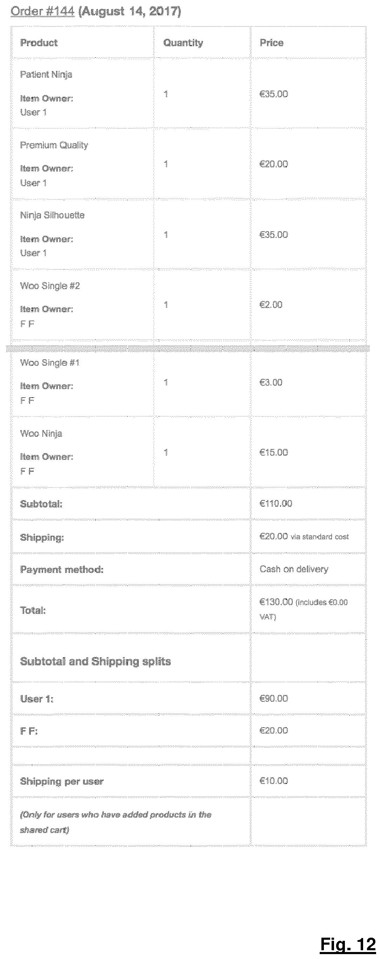

Figure 2.5 describe the process flowchart of the admin customer once the guest users completed their activity. In step 302 share cart owner receives email notifications as each guest user completes the process of updating the cart. Cart owner goes to "cart/basket" page 302 where a complete list of items and subtotals of items and shipping costs are displayed by user 304. Figure 9 shows the list of items of share cart with the user names attached to each item. Figure 10 shows the activity log section, according to step 306, information related to the share cart are displayed. Duration, start time, end time, users emails of the participants and users emails of the guest that finished the process are the main information of the shared activity log section. Figure 11 shows the subtotal and shipping costs split at the bottom of the admin cart page. In step 308 cart owner proceeds to checkout and guest users receive notification of the completed order with breakdown of costs by user. As illustrated by figure 12 the vendor receives the order with the split by user 312. In this case he will be able to separate the goods according to the users even if it's a single delivery 314. Users will find the split convenient and efficient once they receive the goods.

## Claims

1. a method for allowing e-commerce transactions between a single vendor website or third-party marketplace and a plurality of users acting under the same shopping cart via a unique shopping cart comprising the steps of:
• sending from a web server 102 to client computers (106, 108 and 110) via the internet 104 information 116 on products offered by the vendor: selecting from the list the items desired by the customers and enabling the web server 102 to aggregate the information of clients that made the choice of shopping together by creating a unique share cart 114 directly in the database or storage device 112 of the web server 102

2. the method of claim 1 further comprised of the step of enabling purchaser/shopper to select or create the group of guest users or create an occasional list of guest users to invite joining the share cart 226 230 238 258

3. the method of claim 1 further comprised of the step of creating a "unique" share cart of which the initial purchaser\shopper become the administrator 236 268

4. the method of claim 1 further comprised of the step of enabling guest users of a window opportunity, determined by the administrator, to interact and add products 232 264

5. the method of claim 1 further comprised of the step of enabling the share cart administrator to notify via email the guest users of the shopping opportunity providing all the details necessary to complete successfully the transaction 270

6. the method of claim 1 further comprised of the step of selecting the share cart or the own personal cart from the "switch" button 286

7. the method of claim 1 further comprised of the step of updating the users thanks to the shared activity log. A dedicated section displayed under the cart/basket page that inform the users with all the relevant information like duration of the share cart, start and end time of the cart, guest users emails, users that finished the process of updating the cart. 306

8. the method of claim 1 further comprised of the step of enabling the guest users to click the "finish" button ending the shared session 296

9. the method of claim 1 further comprised of the step of enabling the guest users to notify the administrator (cart owner) via email that the sharing session has been completed and the items added 298

10. the method of claim 1 further comprised of the step of notifying all the actors (cart owner, guest users and vendor) that the order has been completed with the inclusion of the order breakdown by user. Delivery costs are split by user as well. 310 312

11. apparatus for enabling e-commerce between a vendor and a plurality of users via a network comprising:
• a web server 102 that sends information 116 via the internet/data network 104 about product and service offering to client computers (106, 108 and 110)
• a selection receiver that enables customers to select items to purchase
• a data storage device or database 112 that collect the relevant information of vendor and shoppers and, thanks to a built in plug-in solution, facilitates the said server computer 102 to cross check the data and create a unique table of data (share cart) 114 directly in the database 112
